# EUROPEAN PATENT APPLICATION

(11) **EP 0 913 978 A2**
(43) Date of publication of application: **06.05.1999**
(21) Application number: 98308603.4
(22) Date of filing: 21.10.1998
(51) Int. Cl.: H04M 1/00, H04M 1/274

(54) **Acoustic coupling device**

(30) Priority: 31.10.1997 US 962406; 31.10.1997 US 962402
(71) Applicant: NCR INTERNATIONAL INC., Dayton, Ohio 45479 (US)
(72) Inventor: Kiger II, Russell C., Lexington, South Carolina 29072 (US)
(74) Representative: Irish, Vivien Elizabeth

(57) **Abstract**

A system (10 or 210) comprising an acoustic coupling device (20 or 220), a standard telephone (40), and a computerised product support system (50) is described. In use, the acoustic coupling device (20 or 220) is able to transmit information about an associated product using the standard telephone (40). The computerised product support system (50) automatically recognizes and records the transmitted information. A method for providing verified access to a product service provider over a standard telephone line, a method for providing product information over a telephone line, and an acoustic coupling device (20 or 220) are also described.

## Description

The present invention relates to an acoustic coupling device, a method for using the device, and a system incorporating the device.

Many service providers supporting hardware products, such as computer systems, computer-controlled machinery and the like, use standard telephone services to initiate a call. These service providers need to verify that a caller is entitled to their service. Additionally, to maintain a competitive edge, these service providers need to make the access to the service as quick and simple as possible.

To verify that the caller is entitled to their service, the product's serial number must be captured at the beginning of a service call. This is generally a cumbersome process because the regulations from product-certification organizations such as UL (Underwriter Laboratories Inc.), CSA (Canadian Standards Association), and VDE (Verband Deutscher Elektrotechniker), specify that the printed serial number label must be attached to the frame of the product, near its power source, which is usually on or near the base of the product. This placement of the printed serial number label may cause difficulty for the customer trying to find the desired product serial number in a timely and accurate manner so the serial number may be given to the service provider. Also, a product's serial number may be hidden by mounting equipment requiring burdensome disassembly, such as having to remove a cash register from its mounting in a check-out stand.

In one aspect, the invention provides a system characterised by an acoustic coupling device including product information; a standard telephone; and a computerised product support system which recognizes and records the information provided by the acoustic coupling device to determine entitlement to service.

The product information may contain service access and/or authentication information; alternatively, or additionally, the product information may contain product identification information such as a product identification number.

The acoustic coupling device may be mounted in an easily accessible location on the product to be serviced, for example, on the front of the product to be serviced. The acoustic coupling device may include a telephone number of a service provider.

In a second aspect the invention provides an acoustic device characterised by: an activation switch; a power source connected to the activation switch; and an acoustic transducer which emits tones corresponding to product information relating to a product with which the acoustic device is associated when the activation switch is activated.

The acoustic device may be portable or may be mounted on a product to be serviced.

In a third aspect the invention provides a method for providing verified access to a product service provider over a standard telephone line, characterised by the steps of: providing a portable acoustic device including service access and/or authentication information associated with a product; placing the portable acoustic device near a standard telephone receiver; and activating the acoustic device so that tones corresponding to the service provider's telephone number and access and/or authentication information are emitted and transmitted over the standard telephone line.

In a fourth aspect the invention provides a method for providing product information over a standard telephone line, comprising the steps of: providing an acoustic device including product identification number associated with a product; dialing a service provider's telephone number; providing an instruction to press the activation switch while holding the telephone receiver near the acoustic transducer; emitting from the acoustic transducer a series of tones corresponding to the product identification number recognising and recording the transmitted information; and using the transmitted information to determine service entitlement.

Embodiments of the invention will now be described, by way of example, with reference to the accompanying drawings in which:
Fig 1 is a diagram of a first embodiment of an acoustic coupling device system according to the invention;
Fig 2 is a flowchart relating to Fig 1;
Fig 3 is a diagram of a second embodiment of an acoustic coupling device system according to the invention, and
Fig 4 is a flowchart relating to Fig 3.

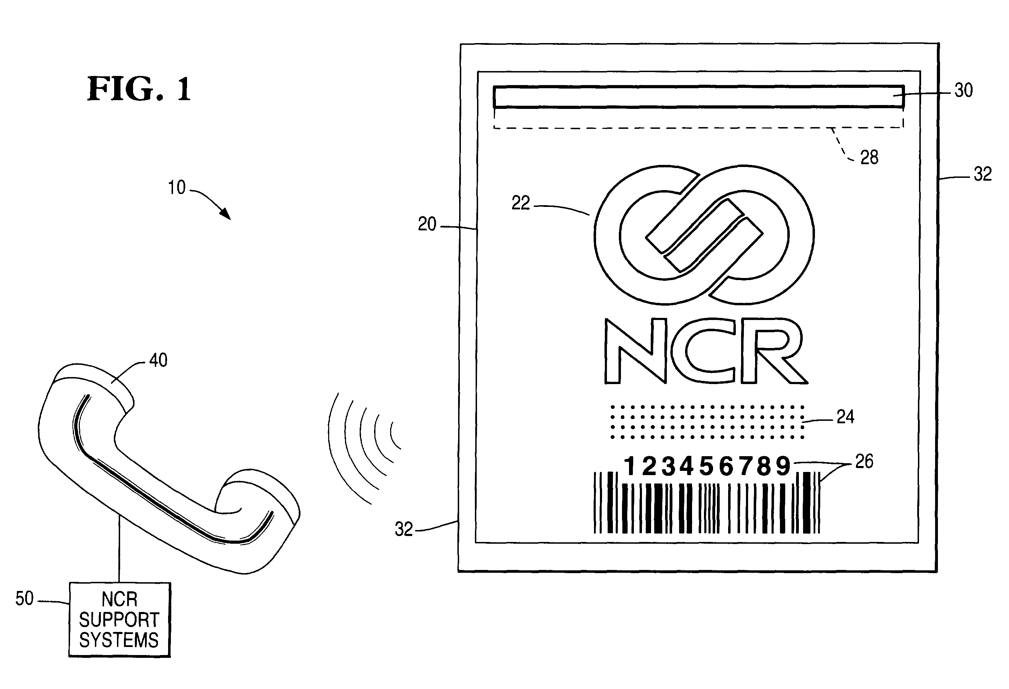

Reference is now made to Fig 1, which shows a diagram of an acoustic coupling device system 10 for mobile service access and authentication.

The system includes an acoustic coupling device 20, a standard telephone 40 at the customer site, and a computerised support system 50. The acoustic coupling device 20 includes an activation switch 22, an acoustic transducer or speaker 24, and a device power source 28. The acoustic coupling device may also include a product serial number or other identification number 26. The product serial number 26 may be in human readable form such as Arabic numbers or in bar code form to be read by a scanner.

Acoustic coupling device 20 can be formed of any standard components currently used to provide credit card or business card sized automatic dialers such as those described in U.S. Patent 4,995,077 issued to Malnowski and 5,343,519 issued to Feldman. Acoustic coupling device 20 also preferably includes a memory for storing at least the product serial number or other product identification information which is to be transmitted to the service provider. Acoustic coupling device 20 may be formed of plastic or other lightweight, durable material suitable for a portable device.

The device power source 28 may be a battery power source. The power source for the acoustic coupling device 20 is preferably independent from the product's power source so that it is always readily available.

The activation switch 22 is preferably blended into the device such as a raised area under the company logo as shown in Fig 1. The raised area preferably has a flexible area in the surface for engaging the activation switch when slight pressure, as by a fingertip, is applied. Obviously, any type of switch may be used which fits compactly onto the device. Preferably the switch is hidden behind a decal or insignia on the device.

The system 10 also includes a standard telephone 40 over which the tones emitted by the acoustic coupling device 20 are provided to the product support system 50. The product support system preferably includes a computerised answering system to recognize and record the information provided by the acoustic coupling device 20 and to notify the appropriate service personnel.

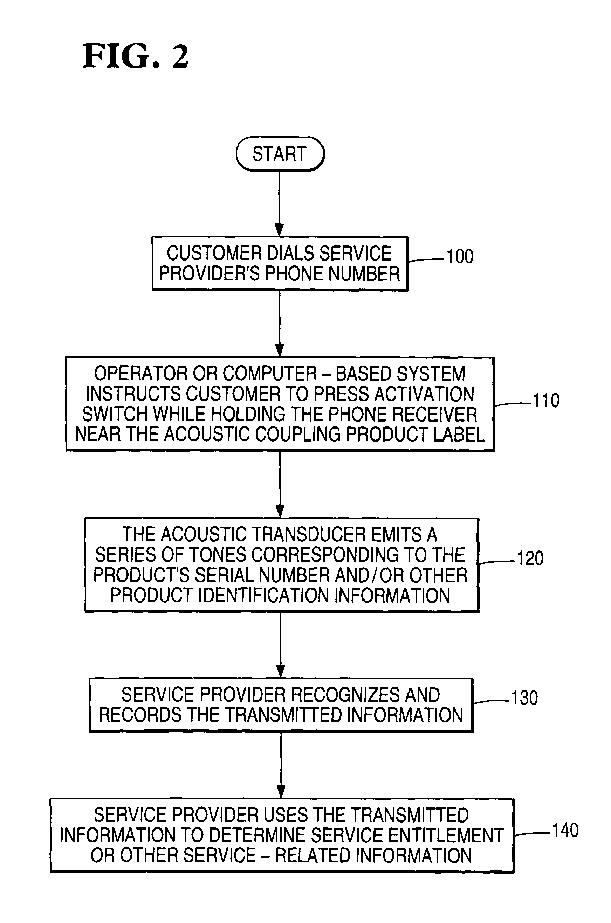

Referring to Fig 2, in operation, when a product associated with an acoustic device has a problem, the customer/caller places the acoustic device near a standard telephone receiver with a dial tone present (step 100). The customer/caller presses the activation area of the acoustic device while holding the phone near the acoustic device (step 110). The memory of the acoustic device which stores the service provider's telephone number and also the required access and/or authentication numbers provides the information to the acoustic transducer when power is applied which occurs when the switch is activated. The device then emits a series of tones corresponding to the service provider's telephone number and the required access and/or authentication numbers inserting appropriate pauses or reading responses from the service provider's system as needed to provide the tones at the appropriate times (step 120). The service provider's system quickly recognizes and captures the transmitted information (step 130). The service provider then uses the transmitted information to determine service entitlement or other service-related information (step 140). This method saves the customer/caller from having to locate and dial the service provider's telephone number and provide additional information for the service provider to verify entitlement, saving time for both the customer/caller and the service provider.

Referring back to Fig 1, the low-cost acoustic coupling device 20 transfers the service provider's telephone number and the other access and/or authentication information over a standard phone handset to a PBX switch at the service provider. One such PBX switch is marketed under the name Conversant by AT&T of New Jersey. Such a transfer eliminates the need for special equipment (such as a modem) at the customer's site. This method also works over all styles of phone networks and PBX systems whether digital, analog or hybrid.

Additionally, if the customer/caller's PBX switch is set to not permit outside calls from the telephone located near the product which is experiencing a problem, the acoustic coupling device 20 may emit tones that enable the PBX switch to recognize the call as an authorized service call and to allow it to be placed. (The term "outside call" is intended to indicate any calls not within the business' approved network. For example, in the retail sector, telephones at workstations may be blocked from making telephone calls to any telephones not located at other workstations at the same location.) Similarly, if a customer/caller telephone is blocked from placing long-distance calls and the service provider's telephone number is a long-distance call, the acoustic coupling device could provide tones, recognized by the PBX switch, indicating that the call is an authorized service call and allowing the call to be connected.

An advantage of this embodiment is that it simplifies the call to the service provider when a problem with a serviced product occurs. Additionally, the acoustic coupling device uses a standard telephone connection and does not require the customer to purchase or provide any additional hardware such as a modem to enable the automatic capture of access and authentication information required by the service provider. Another advantage is that the customer/caller does not need to hunt and spend time and effort providing the service provider's telephone number and the service access and/or authentication numbers and wait while the service provider's operator receives the numbers and verifies entitlement. It is anticipated that the service provider's computer would access the customer/caller's information based on the transmitted information, so that the service provider's operator would have the necessary customer information without requiring effort from the customer/caller.

Fig 3 shows a diagram of an acoustic coupling device system 210 for assisting customers in providing a product's serial number.

The system 210 includes an acoustic coupling product label 220, a standard telephone 40 at the customer site, and a computerized support system 50. The acoustic coupling product label 220 is mounted on a product 32 in a relatively easily accessible location. The acoustic coupling product label 220 includes an activation switch 22, an acoustic transducer or speaker 24, and a power source 28. The acoustic coupling product label includes a product serial number or other product identification number 26. The product identification number 26 may be in human readable form such as Arabic numbers or in bar code form to be read by a scanner. Acoustic coupling product label 220 also includes a memory for storing at least the product identification number or other product identification information which is to be transmitted to the service provider.

The power source 28 may be a battery power source or a solar power source from a solar collector 30 and is preferably a combination of the two types of power sources. The power source 28 for the acoustic coupling product label is preferably independent from the product's power source so that it is always readily available. The power source also preferably includes a small rechargeable battery to supply the label with a short burst of energy greater than the collector 30 alone can supply.

The product support system 50 includes a computerised answering system to recognize and record the information provided by the acoustic coupling product label 220 and to notify the appropriate service personnel.

Referring to Fig 4, in operation, when a product to which an acoustic coupling label is attached has a problem, the customer dials the service provider's phone number to request service (step 400). The customer/caller is directed by an operator or a computerised response system to press the activation area of the acoustic coupling label while holding the phone near the acoustic coupling label (step 410). The memory of the acoustic coupling label which stores the product's identification number and/or other product identification information provides the information to the acoustic transducer or speaker when power is applied which occurs when the switch is activated.

The label then emits a series of tones corresponding to the product's identification number and/or other product identification information (step 420) which the service provider's system quickly recognizes and captures (step 430). The service provider uses the transmitted information to determine service entitlement or other service-related information (step 440). This method saves the customer/caller from having to move the product or otherwise expend effort to find the product identification number or serial number, improves the accuracy of the capture of the number, and saves time for both the customer/caller and the service provider.

Referring back to Fig 3, the low-cost acoustic coupling product label 220 transfers the product identification number or serial number over a standard phone handset to a PBX switch at the service provider.

An advantage of this embodiment is that it simplifies the product identification number capture routine necessary at the start of a service call. Additionally, the acoustic coupling product label of the invention uses a standard telephone connection and does not require the customer to purchase or provide any additional hardware such as a modem to enable the automatic capture of the serial number or other identification number or other product information.

The acoustic coupling product label is attractive enough to mount the label conspicuously on the front of the product. The acoustic coupling product label preferably does not replace the regulatory labeling as discussed in the background section above. Preferably, to simplify the system, the actual serial number of the product may not be used, but instead a system-level connection to correlate the actual serial number and the product identification number at the service provider is used.

To provide the acoustic coupling product label functionality on existing products supported by the service provider, an acoustic coupling label can be provided as a field-installable label.

Additional information on the label could include the number printed in human readable form and in a bar code format as well.

Another advantage of the acoustic coupling label is that it significantly streamlines support and quality measurement operations.

Various modifications may be made to the above embodiments within the scope of the invention.

## Claims

1. A system (10 or 210) characterised by:
an acoustic coupling device (20 or 220) including product information;
a standard telephone(40); and
a computerised product support system (50) which recognizes and records the information provided by the acoustic coupling device (20 or 220) to determine entitlement to service.

2. The system of claim 1, wherein the acoustic coupling device (20 or 220) is mounted on an easily accessible location on the product to be serviced.

3. The system of claim 1, wherein the acoustic coupling device (20 or 220) is portable.

4. The system of any preceding claim, wherein the acoustic coupling device (20 or 220) includes a telephone number of the service provider.

5. An acoustic coupling device (20 or 220) characterised by:
an activation switch (22);
a power source (28) connected to the activation switch (22); and
an acoustic transducer (24) which emits tones corresponding to product information relating to a product with which the acoustic device (20 or 220) is associated when the activation switch is activated.

6. A method for providing verified access to a product service provider over a standard telephone line (40), using an acoustic coupling device (20 or 220) including information associated with a product; characterised by the steps of:
placing the portable acoustic device near a standard telephone receiver (step 100); and
activating (step 110) the acoustic device (20 or 220) so that tones corresponding to the service provider's telephone number and access and/or authentication information are emitted and transmitted (step 120) over the standard telephone line.

7. The method of claim 7, wherein the acoustic coupling device (20 or 220) inserts appropriate pauses while transmitting the tones over the standard telephone line so the service provider's system (50) recognizes the transmitted information.

8. The method of claim 6 or 7, further including the step of the service provider using the transmitted tones to determine service entitlement or other service-related information (step 140).

9. A method for providing product information over a standard telephone line (40) using an acoustic device including product identification number associated with a product, comprising the steps of:
dialing a service provider's telephone number (step 400);
providing an instruction to press the activation switch while holding the telephone receiver near the acoustic transducer (step 410);
emitting from the acoustic transducer a series of tones corresponding to the product identification number (step 420);
recognising and recording the transmitted information (step 430); and
using the transmitted information to determine service entitlement (step 440).

10. The method of claim 9, wherein additional tones indicating that the call is an authorised service call are transmitted before the tones corresponding to the product identification number.
